# FASCICULE DE BREVET EUROPEEN

(11) **EP 0 965 004 B1**
(45) Date de publication et mention de la délivrance du brevet: **09.04.2003**
(21) Numéro de dépôt: 98906985.1
(22) Date de dépôt: 06.02.1998
(51) Int. Cl.: F16D 23/14

(54) **BUTEE DE DEBRAYAGE**
KUPPLUNGSAUSRÜCKLAGER
CLUTCH THRUST BLOCK

(30) Priorité: 07.03.1997 FR 9702726
(43) Date de publication de la demande: 22.12.1999
(73) Titulaire: SNR ROULEMENTS, 74010 Annecy Cédex (FR)
(72) Inventeur: MARIE, Laurent, F-74290 Menthon Saint Bernard (FR)
(74) Mandataire: Srour, Elie
(86) Numéro de dépôt international: FR9800221
(87) Numéro de publication internationale: WO98040637

(56) Documents cités:
- EP-A- 0 272 967
- DE-U- 29 701 982
- FR-A- 2 611 009
- FR-A- 2 611 244

## Description

L'invention concerne une butée de débrayage selon le préambule de la revendication 1. Une telle butée est connue de document FR-A-2 611 009. La publication FR-A-2607885 décrit une butée de débrayage dans laquelle l'élément de manoeuvre et l'élément d'actionnement sont solidarisés à l'aide d'une rondelle élastique à action axiale, qui possède une position de service dans laquelle la rondelle exerce un effort de retenue sur l'un et l'autre élément de la butée.

Dans une telle butée, l'élément de manoeuvre est actionné à titre d'exemple non limitatif par une fourchette et déplace un élément d'actionnement, tel qu'un roulement.

On appellera de ce fait dans la suite de la description :
"roulement de butée" ou "roulement", l'élément d'actionnement, destiné à être placé en appui de butée sur le dispositif débrayeur.
"support de roulement" ou "support", l'élément de manoeuvre mobile axialement, sous l'action d'une fourchette de commande.

Le problème non résolu sur les butées de débrayage du type prédéfini, qui possèdent un roulement assemblé à un support, réside dans le fait que le roulement et le support, peuvent être séparés accidentellement par suite d'un positionnement défectueux de la rondelle élastique d'assemblage.

Un autre problème non résolu sur les butées de débrayage, réside dans le fait que l'effort de poussée axial de l'outil de montage de la rondelle d'assemblage, s'exerce dans une zone de moindre résistance de la rondelle.

Cette manière de procéder augmente les risques de déformation permanente de la rondelle, cause d'un maintien défectueux du roulement sur son support.

Pour remédier à cet inconvénient, on a cherché à réduire l'effort de poussée axial de l'outil de montage. Cette manière de procéder augmente les risques d'une défectuosité de l'assemblage du roulement sur son support.

La présente invention vise donc plus particulièrement à perfectionner l'assemblage du roulement avec son support par la mise en oeuvre d'une rondelle élastique à action axiale d'appui, montée en compression entre lesdits roulement et support.

Selon l'invention, la rondelle possède une première série de griffes élastiques de retenue, montées en appui axial sur une nervure circulaire du support, et une deuxième série de griffes d'actionnement dirigées en sens inverse du sens de montage de la rondelle, et sur laquelle les extrémités des griffes de la première série sont respectivement disposées le long d'une première circonférence dont le diamètre est inférieur à celui de la circonférence passant par le sommet de la nervure, tandis que les extrémités des griffes de la deuxième série sont disposées le long d'une circonférence dont le diamètre est supérieur à celui de la circonférence passant par le sommet de la nervure.

La butée ainsi réalisée, autorise la mise en appui d'un outil de poussée sur les griffes d'actionnement, dont le déplacement axial permet aux griffes de retenue de s'accrocher sur la nervure circulaire du support.

La butée conforme à l'invention autorise l'exploitation d'un outillage de montage de taille réduite, qui assure l'immobilisation axiale rapide du roulement sur son support. L'outillage prend dans ce cas appui sur les différentes griffes d'actionnement de la rondelle et vient en butée sur la nervure, circulaire du support, ce qui permet d'exercer un effort important sans risque de détérioration de la rondelle.

Par ailleurs, la ligne circulaire de pliage des griffes de retenue et d'actionnement, s'étend le long d'une circonférence dont le diamètre est sensiblement égal au diamètre de la circonférence passant par le sommet de la nervure. Cette mesure constructive assure la flexion des griffes d'actionnement au cours de leur déplacement relatif par rapport aux griffes de retenue, dans le plan de la nervure, et le positionnement desdites griffes d'actionnement parallèlement à l'axe de la butée.

Cette mesure constructive améliore également l'appui de l'outillage sur les griffes d'actionnement et assure une meilleure transmission de l'effort de poussée en réduisant les risques de détérioration desdites griffes.

D'autres caractéristiques et avantages de l'invention apparaîtront à la lecture de la description d'exemples de réalisation de la butée, en référence au dessin annexé dans lequel :
- La figure 1 est une demi-vue, en coupe axiale d'une butée assemblée, conforme à l'invention.
- La figure 2 est une demi-vue, en coupe axiale, d'une première variante de réalisation de la butée.
- La figure 3 est une demi-vue, en coupe axiale, d'une deuxième variante de réalisation de la butée.
- La figure 4 est une représentation perspective de la rondelle d'assemblage du roulement de butée sur son support.
- Les figures 5, 6, 7 sont des demi-vues en coupe axiale de la butée représentée aux figures 1, 2, 3, au cours de la phase d'assemblage du roulement de butée sur son support.

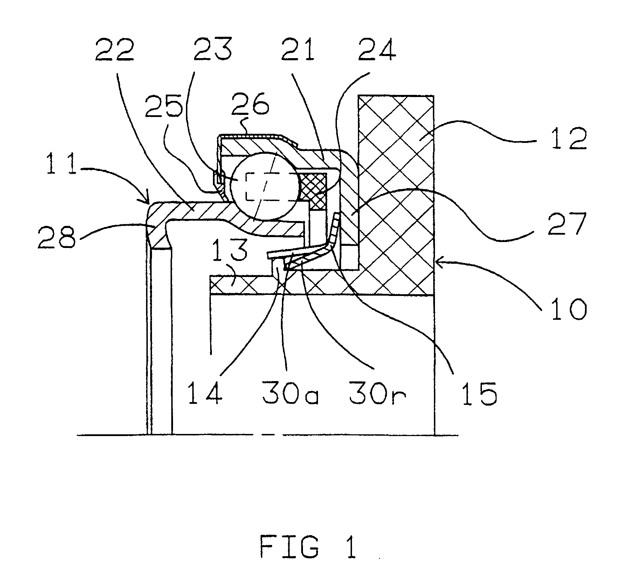

Telle qu'illustrée sur les figures 1, 2, 3, la butée de débrayage conforme à l'invention possède des éléments fonctionnels principaux suivants:
- un support de roulement 10 qui est destiné à être soumis à l'action d'un organe de manoeuvre, constitué à titre d'exemple non limitatif par une fourchette de commande, non représentée.
- un roulement de butée 11 directement en appui, à titre d'exemple contre un flasque radial 12 du support 10.

Le roulement 11 agit sur le dispositif débrayeur, constitué à titre d'exemple non limitatif, par les extrémités des doigts d'un diaphragme qui fait partie d'un mécanisme d'embrayage, également non représenté.

Le support 10 est constitué, selon une configuration connue, par un manchon 13 dont l'extrémité porte le flasque radial annulaire 12. Selon les exemples représentés de la butée, le manchon 13 est de configuration cylindrique et porte sur sa surface cylindrique extérieure, une nervure circulaire 14 ,de blocage de la rondelle d'assemblage 15 desdits support 10 et roulement 11.

Le roulement 11 possède de manière en soi connue, une bague extérieure 21 et une bague intérieure 22 , qui portent les chemins de roulement des corps roulants 23, montés dans une cage 24. Un joint d'étanchéité 25 est solidaire d'une armature en tôle 26, sertie sur la bague extérieure 21. Selon une configuration connue, la bague extérieure 21 possède un bord tombé 27, dirigé radialement vers l'axe de rotation du roulement et monté en appui sur le flasque 12 du support 10.

La bague 22 porte également de manière connue, un bord tombé 28, dirigé radialement vers l'axe de rotation du roulement et adapté à agir sur le diaphragme du mécanisme d'embrayage.

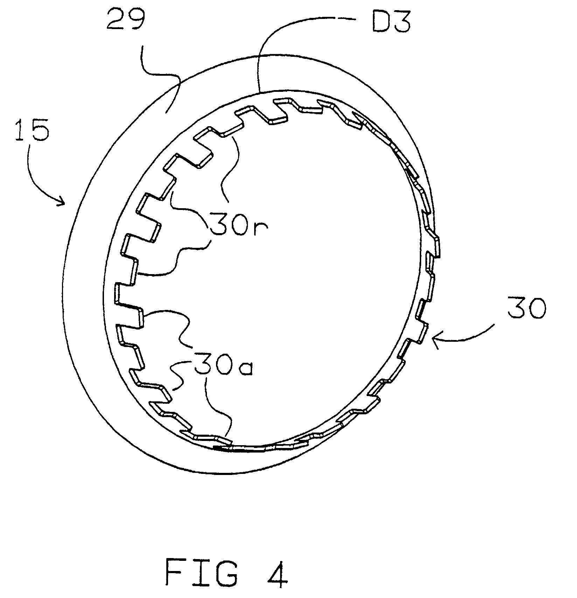

La figure 4 représente la rondelle d'assemblage 15. Celle-ci possède une bordure radiale d'appui 29, destinée à coopérer avec la face interne "i" du bord tombé 27 de la bague extérieure 21 , tournée vers la bague intérieure 22. La rondelle d'assemblage 15 possède par ailleurs une terminaison constituée par un ensemble de griffes axiales 30 réparties à l'extrémité opposée à celle de la bordure radiale d'appui 29.

Une première série de griffes élastiques de retenue 30r est destinée à venir en appui axial sur la nervure circulaire 14 du support 10.

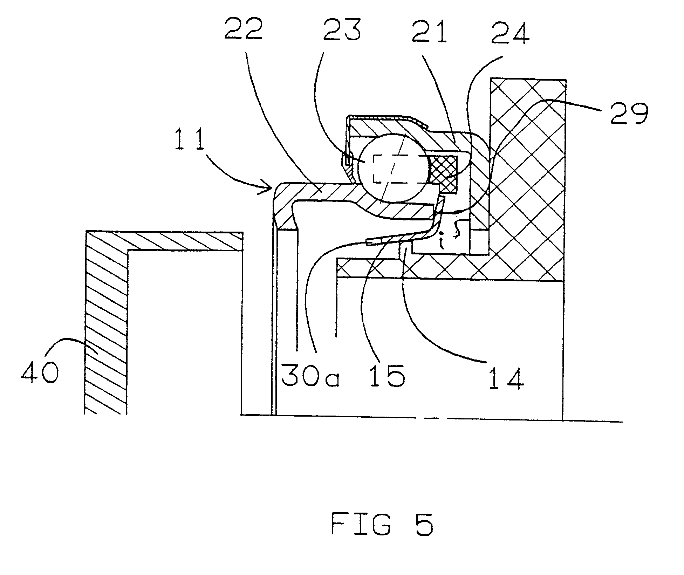

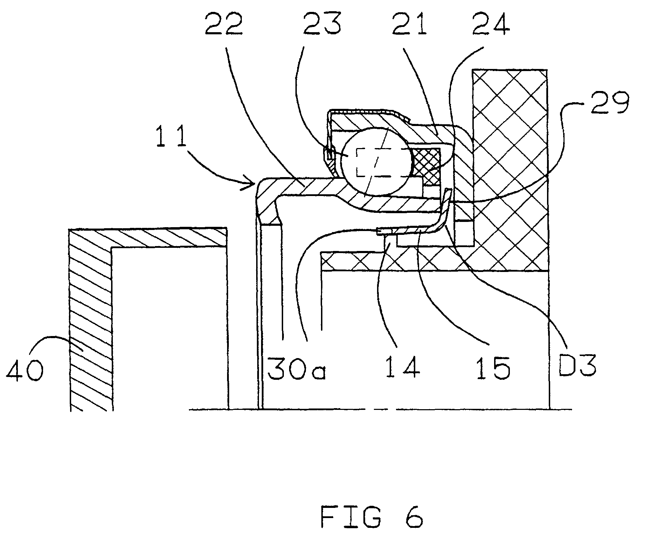

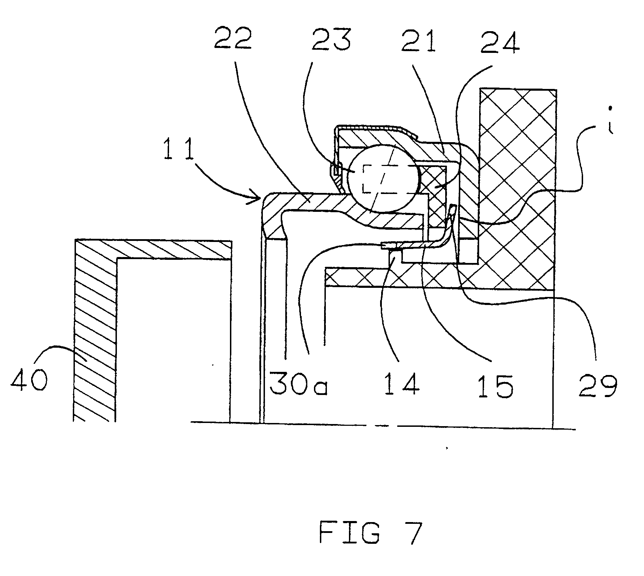

Une deuxième série de griffes d'actionnement 30a est destinée à former l'appui d'un outil de montage 40 ainsi que cela est représenté aux figures 5 à 7.

Dans le but de faciliter le blocage de la rondelle 15, par suite du déplacement axial relatif du support 10 et du roulement 11, les extrémités des griffes 30r de la première série sont élastiques et exercent un effort de flexion en direction du pied de la nervure 14. Les extrémités des griffes 30r sont par ailleurs disposées le long d'une première circonférence D1 dont le diamètre est inférieur à celui de la circonférence passant par le sommet de la nervure 14.

Les extrémités des griffes 30a, longitudinalement alternées avec les griffes 30r le long de la périphérie de la rondelle, s'étendent axialement et le long d'une deuxième circonférence D2 dont le diamètre est supérieur à celui de la circonférence passant par le sommet de la nervure 14.

Les griffes 30a et 30r sont dirigées en sens inverse du sens de montage de la rondelle et sont de longueurs inégales. La différence de longueur des griffes 30a et 30r est au moins égale à l'épaisseur de la nervure 14 ainsi que cela est montré aux figures 5 à 7.

Cette disposition favorise le contact de la rondelle 15 avec l'outil de montage 40 et l'immobilisation temporaire du roulement 10 durant le déplacement du support 11.

Au cours de ce déplacement, l'extrémité du support 10 et la nervure 14 se déplacent également et déforment radialement l'ensemble des griffes de retenue 30r. Pour ce faire, les griffes 30r possèdent une ligne circulaire D3 de pliage conjointement avec les griffes 30a et le diamètre de cette ligne de pliage est sensiblement égal au diamètre de la circonférence passant par le sommet de la nervure 14. Une telle configuration favorise l'expansion des griffes de la rondelle au cours du montage du roulement sur son support.

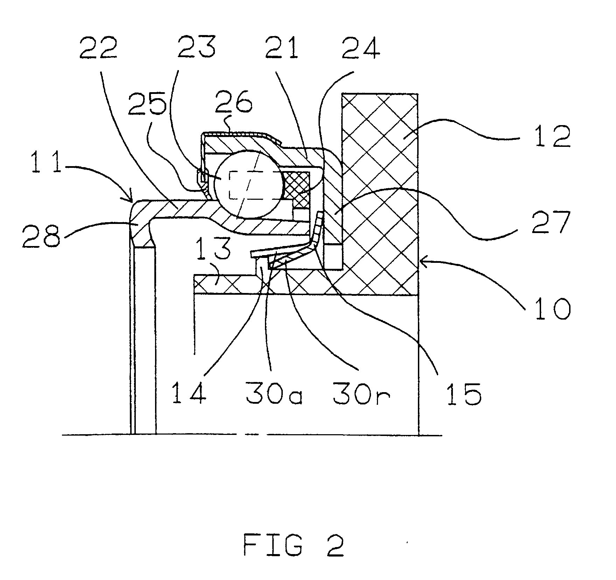

La figure 2 montre que la rondelle 15 peut être immobilisée par suite de la mise en appui préalable sur la rondelle, de l'extrémité de la bague intérieure 22 du roulement.

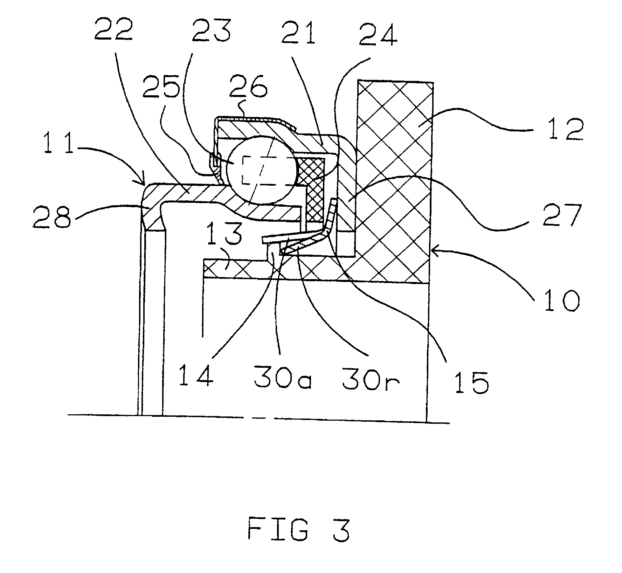

La figure 3 montre que la rondelle 15 peut être immobilisée par suite de la mise en appui préalable sur la rondelle de la cage 24 du roulement 11.

## Revendications

1. Butée de débrayage du type comportant un support de roulement (10) destiné à être soumis à l'action d'un organe de commande et un roulement de butée (11) assemblé et en appui axial contre ledit support de roulement (10) et qui sous l'action du support de roulement (10) agit sur le dispositif débrayeur d'un mécanisme d'embrayage, et dans laquelle une rondelle d'assemblage (15) desdits support (10) et roulement (11) possède une première série de griffes élastiques de retenue (30r) montées en appui axial sur une nervure circulaire (14) du support (10) et une deuxième série de griffes d'actionnement (30a) dirigées en sens inverse du sens de montage de la rondelle (15) dont les extrémités des griffes (30r) de la première série sont respectivement disposées le long d'une première circonférence (D1) dont le diamètre est inférieur à celui de la circonférence passant par le sommet de la nervure (14) tandisque les extrémités des griffes (30r) de la deuxième série sont disposées le long d'une deuxième circonférence (D2) dont le diamètre est supérieur à celui de la circonférence passant par le sommet de la nervure (14) et dans laquelle les griffes de retenue (30r) et les griffes d'actionnement (30a) sont de tailles inégales et leur différence de longueur est au moins égale à l'épaisseur de la nervure circulaire (14) du support (10), **caractérisée par le fait que** les griffes élastiques de retenue (30r) et d'actionnement (30a) sont longitudinalement alternées le long de la périphérie de la rondelle.

2. Butée de débrayage selon la revendication 1, **caractérisée par le fait qu'**une ligne circulaire (D3) de pliage des griffes de retenue (30r) et d'actionnement (30a) de la rondelle d'assemblage (15) s'étend le long d'une circonférence de diamètre sensiblement égal au diamètre de la circonférence passant par le sommet de la nervure (14) du support.

## Claims

1. A clutch release bearing of the type comprising a bearing support (10) intended to be subjected to the action of an actuating member and a thrust bearing (11) assembled and axially bearing against said bearing support (10) and which under the action of the bearing support (10) acts on the clutch release device of a clutch mechanism, and in which a ring (15) for assembly of said support (10) and said bearing (11) has a first series of elastic retaining tongues (30r) mounted in a condition of bearing axially against a circular rib (14) of the support (10) and a second series of actuating tongues (30a) directed in the opposite direction to the direction of mounting of the ring (15) of which the ends of the tongues (30r) of the first series are respectively disposed along a first circumference (D1) of which the diameter is smaller than that of the circumference passing through the apex of the rib (14) while the ends of the tongues (30a) of the second series are disposed along a second circumference (D2) of which the diameter is larger than that of the circumference passing through the apex of the rib (14), and in which the retaining tongues (30r) and the actuating tongues (30a) are of unequal sizes and their difference in length is at least equal to the thickness of the circular rib (14) of the support (10) **characterised in that** the elastic retaining (30r) and actuating (30a) tongues are longitudinally alternated along the periphery of the ring.

2. A clutch release bearing according to claim 1 **characterised in that** a circular line (D3) of bending of the retaining (30r) and actuating (30a) tongues of the assembly ring (15) extends along a circumference of a diameter substantially equal to the diameter of the circumference passing through the apex of the rib (14) of the support.

## Patentansprüche

1. Kupplungsausrückvorrichtung, mit einer Halterung (10) für ein Lager, das zur Beaufschlagung durch ein Bedienungsorgan dient und mit einem Stützlager (11), das mit der Halterung (10) für das Lager zusammengebaut ist und sich axial auf ihm abstützt und das, unter der Einwirkung der Halterung (10) für das Lager auf die Ausrückanordnung einer Kupplung einwirkt, wobei eine Federscheibe (15) für den Zusammenbau der Halterung (10) mit dem Lager (11) einer erste Reihe von elastischen Halteklauen (30r) aufweist, die derart angeordnet sind, dass sie sich in Axialrichtung auf einer kreisförmigen Rippe (14) der Halterung (10) abstützen und eine zweite Reihe von Betätigungsklauen (30a) aufweist, die entgegengesetzt zur Montagerichtung der Federscheibe (15) ausgerichtet sind, wobei die Enden der Klauen (30r) der ersten Reihe entlang eines ersten Umfangs (D1) angeordnet sind, dessen, Durchmesser kleiner ist derjenige des Umfangs, der durch den Scheitel der Rippe (14) verläuft, während die Enden der Klauen (30a) der zweiten Reihe entlang eines zweiten Umfangs (D2) angeordnet sind, dessen Durchmesser größer ist als derjenige des Umfangs, der durch den Scheitel der Rippe (14) verläuft und wobei die Halteklauen (30r) und die Betätigungsklauen (30a) ungleiche Abmessungen aufweisen, derart, dass ihr Längenunterschied mindestens gleich der Dicke der kreisförmigen Rippe (14) der Halterung (10), **dadurch gekennzeichnet, dass** die elastischen Halteklauen (30r) und die Betätigungsklauen (30a) in Längsrichtung abwechselnd entlang des Umfangs der Federscheibe angeordnet sind.

2. Kupplungsausrückvorrichtung nach Anspruch 1, **dadurch gekennzeichnet, dass** sich eine kreisförmige Biegelinie (D3) für die Halteklauen (30r) und für die Betätigungsklauen (30a) der Federscheibe (15) für den Zusammenbau entlang eines Umfangs erstreckt, dessen Durchmesser im wesentlichen gleich dem Durchmesser des Umfangs ist, der durch den Scheitel der Rippe (14) der Halterung verläuft.
